# EUROPEAN PATENT APPLICATION

(11) **EP 0 735 229 A1**
(43) Date of publication of application: **02.10.1996**
(21) Application number: 96200876.9
(22) Date of filing: 01.04.1996
(51) Int. Cl.: E06B 9/54, E06B 9/40, B60J 1/20

(54) **Roller blind unit**

(30) Priority: 01.04.1995 NL 1000005
(71) Applicant: POLYPLASTIC B.V., NL-3044 CK Rotterdam (NL)
(72) Inventor: Schuurman, Rinus, 3053 SK Rotterdam (NL)
(74) Representative: Jilderda, Anne Ayolt

(57) **Abstract**

A roller-blind unit comprises two roller-blind holders (3,4) located opposite each other in which a roller (31,41) pertaining to the blind is mounted so as to be capable of rotation. The rollers are each coupled to a blind (33,43), a free end of which is provided over practically its entire width with a relatively rigid cross-bar (34,44). One of the two cross-bars (34) comprises a longitudinal groove (36) in order to receive the other cross-bar (44) therein, said longitudinal groove (36) being formed by a relatively soft, flexible strip (342) placed on a relatively rigid base part (341).

## Description

The invention relates to a roller-blind unit comprising two elongated roller-blind holders located opposite each other in which a roller pertaining to the blind is mounted so as to be capable of rotating about an axis, whereby the two rollers are coupled to a first blind and a second blind respectively, a free end of which is provided over at least virtually its entire width with a relatively rigid cross-bar, whereby one of the two cross-bars comprises a longitudinal groove in order to receive the other cross-bar therein and whereby the cross-bars are provided with means to bring about a manually detachable connection between them.

Such a roller-blind unit is often fitted in a mobile home such as a boat, camper or caravan and generally comprises both a darkening blind and a gauze-screen blind in order to keep out insects and other vermin. The darkening blind is connected on its first side to the roller of the first roller-blind holder, whereas the gauze-screen blind is attached by a corresponding first side to the roller of the other roller-blind holder. The free ends of both blinds are provided over practically their entire width with a rigid cross-bar with which the blind can be operated and is held in the desired taut upright shape. Each of the two roller-blind holders is usually further provided with an automatic roll-up mechanism in order to wind the pertinent blind on the roller automatically.

In practice it often appears desirable to darken the window opening only partially, whereby the remaining part of the window opening is covered by the gauze-screen blind in order to keep out insects in particular. In order to provide for this, both cross-bars are generally profiled in complementary manner and provided with means to bring about a manually detachable connection between them. In the mutually coupled state both blinds are operated simultaneously and the desired degree of darkening can be adjusted in continuous or discontinuous manner. The complementary profiling of the cross-bars provides for exact attachment of both blinds with respect to one another.

For a good connection of both cross-bars and mutual sealing, one of the two cross-bars usually comprises a longitudinal groove in which the other cross-bar is received. However, one drawback here is that the edges of the longitudinal groove are generally relatively sharp, as a result of which people could injure themselves on them if they come into violent contact with them, for example in the event of accidents or other calamities. This drawback applies in particular in the case of a mobile home in which people may be present while the home is moving, such as a camper or a yacht. However, thicker and therefore less sharp edges on the longitudinal groove are not an attractive option from an aesthetic point of view, since as a result the cross-bar as a whole would become too bulky. And, last but not least, thicker edges are at the same time disadvantageous from the point of view of business economy, since as a result more material will be required, which ultimately has an effect of increasing the cost price.

With the present invention the object is, inter alia, to provide a roller-blind unit of the type specified at the beginning which even with a relatively slender cross-bar offers adequate protection to possible occupants of the home.

To this end a roller-blind unit of the type specified at the beginning is characterised according to the invention in that at least one of the two cross-bars comprises a relatively rigid base part which on its side facing away from the blind associated with it is provided with a relatively soft, flexible profiled strip which comprises the longitudinal groove in order to receive the other cross-bar therein. The rigid base part of the cross-bar provides for the required rigidity of the bar as a whole, while as a result of the application of a relatively soft profiled strip for the longitudinal groove the safety of the people in the mobile home is not endangered, not even if the edge of the groove is made relatively thin in order to satisfy aesthetic requirements.

A particular embodiment of the roller-blind unit according to the invention is characterised in that the upper surface of the base part of the stated cross-bar facing away from the blind attached to it leads to rounded edges with a radius of curvature of at least about 3.2 millimetres. Another particular embodiment further has the characteristic that all the remaining relatively rigid, inward-directed parts of the upper surface of the roller-blind unit also exhibit a radius of curvature of at least 3.2 millimetres. Within the scope of the invention the concept of an inward-directed part of the upper surface is to be understood to mean any part of the roller-blind unit that could be touched by a ball with a diameter of 165 millimetres rolling over the inner wall of the home, wholly in line with a relevant Directive from the European Commission which is in force. As a result, the last-mentioned special embodiment of the roller-blind unit according to the invention satisfies strict European safety requirements that aim to guarantee the safety of people in the mobile home in the event of a possible collision.

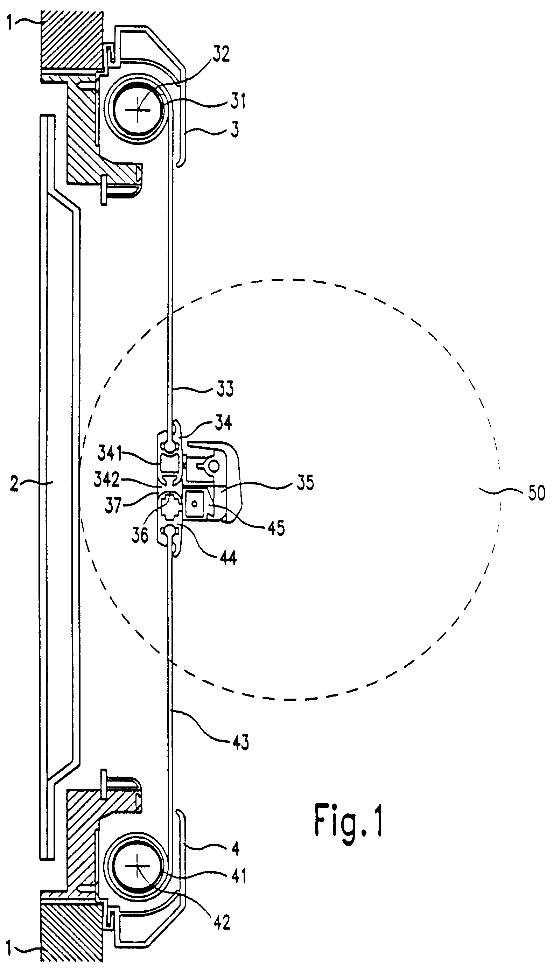

The invention will now be elucidated more fully on the basis of an embodiment example and a drawing in which
- Figure 1: reproduces a cross-section of an embodiment of the roller-blind unit according to the invention.

The Figure is purely schematic and not drawn to scale. In particular it is possible to reproduce some dimensions in highly exaggerated manner for the sake of clarity. Corresponding parts are indicated in the Figure as far as possible with a similar reference number.

The roller-blind unit of Figure 1 is placed on the inside of a window 2 that is capable of being opened outward in the wall 1 of a mobile home such as a caravan, camper or yacht. For the sake of clarity, customary means for opening and bolting the window as well as rubber seals are not reproduced in the Figure. Such components are, however, completely obvious to the expert.

The roller-blind unit comprises two elongated roller-blind holders 3,4 located opposite each other which are placed respectively on the upper side and underside of the window 2. The roller-blind holders 3,4 each comprise a roller 31,41 which is mounted therein so as to be capable of rotating about an axis 32,42. Coupled to each roller is a roller-blind, whereby the roller-blind of the upper roller 32 comprises a gauze screen 33 and the lower roller-blind forms a darkening blind 43. In order to wind the pertinent blinds 33,43 in the opened state about the roller 32,42, the rollers 41,42 are provided with automatic roll-up means which are not shown, for example in the form of a torsion spring mounted therein. At the same time these means hold the blinds 33,43 taut in their closed state.

Both blinds 33,43 are provided at their free end with a relatively rigid cross-bar 34,44 which extends over practically the entire width of the blind 33,43. Such a cross-bar 34, 44 serves on the one hand to retain the shape of the blind but on the other hand provides a possibility of coupling both blinds to one another manually. For this purpose the cross-bars are provided with coupling means 35,45 in the form of a grip 35 which hooks around a cam 45 on the other cross-bar 44 in order to be able to bring about a manually detachable connection between them and one of the two cross-bars 34 is provided over its entire length with a longitudinal groove 36 in order to receive the other cross-bar 44 therein, so that both bars 34,44 mutually align themselves of their own accord.

However, such a longitudinal groove has relatively sharp edges 37 if the bar is kept relatively slender. In order to prevent possible occupants of the home 1 from wounding themselves on it, the pertinent cross-bar 34 comprises two parts: a relatively rigid base part 341 that fulfils the remaining functions of the cross-bar 34 stipulated for it and a relatively soft, flexible strip 342 which on the one hand pushes into the base part 341 and on the other hand comprises the longitudinal groove 36 for alignment with the second cross-bar 44. In principle use can be made of any suitable material for the strip 342, for example natural and synthetic rubbers, but also other resilient natural and synthetic materials. In this example the strip comprises a thermoplastic elastomer with a Shore-A hardness of less than 50, which is sufficiently soft to rule out wounds on the edge 37 of the groove with a probability bordering on certainty. The cross-bar 34 can thus remain slender without the associated sharp edges 37 of the longitudinal groove 36 presenting a danger to possible occupants.

In the present embodiment example the base part, and for that matter also all other components of the roller-blind unit, comprises without exception parts of the upper surface with a radius of curvature greater than about 3.2 millimetres. This satisfies strict safety requirements that aim to guarantee the safety of occupants in the case of a possible collision or other calamity. In this context a part of the upper surface is to be understood to mean any part of the roller-blind unit that could be touched by a ball 50 with a diameter of 165 millimetres rolling over the wall of the home 1.

Although the invention is elucidated further on the basis of just a single embodiment example, it will be clear to anyone that the invention is by no means limited to the example given. On the contrary, for an expert it will be possible to realise many more variations and embodiments without departing from the scope of the invention.

Hence, instead of being fitted in connection with a roller-blind unit positioned horizontally, the invention can also be fitted in connection with a roller-blind unit placed vertically.

## Claims

1. Roller-blind unit comprising two elongated roller-blind holders located opposite each other in which a roller pertaining to the blind is mounted so as to be capable of rotating about an axis, whereby the two rollers are coupled respectively to a first blind and a second blind, a free end of which is provided over at least virtually its entire width with a relatively rigid cross-bar, whereby one of the two cross-bars comprises a longitudinal groove in order to receive the other cross-bar therein and whereby the cross-bars are provided with means to bring about a manually detachable connection between them, characterised in that at least one of the two cross-bars comprises a relatively rigid base part which on its side facing away from the associated blind is provided with a relatively soft, flexible profiled strip which comprises the longitudinal groove in order to receive the other cross-bar therein.

2. Roller-blind unit according to Claim 1, characterised in that the upper surface of the base part of the stated cross-bar facing away from the blind attached to it leads to rounded edges with a radius of curvature of at least about 3.2 millimetres.

3. Roller-blind unit according to Claim 1 or 2, characterised in that the flexible strip exhibits a Shore-A hardness of less than 50.

4. Roller-blind unit according to Claim 1, 2 or 3, characterised in that flexible strip is made from a material pertaining to a group of natural and synthetic rubbers.

5. Roller-blind unit according to one of the preceding claims, characterised in that all the relatively rigid, inward-directed parts of the upper surface thereof exhibit a radius of curvature of at least 3.2 millimetres.
